(19) Europäisches Patentamt
European Patent Office
Office européen des brevets

(11) **EP 2 959 621 B1**

(12) # EUROPEAN PATENT SPECIFICATION

(45) Date of publication and mention
of the grant of the patent:
**15.08.2018 Bulletin 2018/33**

(51) Int Cl.:
***H04L 1/00*** (2006.01)      ***H04L 1/20*** (2006.01)

(21) Application number: **14723391.0**

(86) International application number:
**PCT/EP2014/058795**

(22) Date of filing: **30.04.2014**

(87) International publication number:
**WO 2015/165515 (05.11.2015 Gazette 2015/44)**

(54) **COMPUTER PROGRAM PRODUCT AND APPARATUS FOR FAST LINK ADAPTATION IN A COMMUNICATION SYSTEM**

COMPUTERPROGRAMMPRODUKT UND VORRICHTUNG ZUR SCHNELLEN VERBINDUNGSANPASSUNG IN EINEM KOMMUNIKATIONSSYSTEM

PRODUIT PROGRAMME D'ORDINATEUR ET APPAREIL POUR ADAPTATION DE LIAISON RAPIDE DANS UN SYSTÈME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.12.2015 Bulletin 2015/53**

(73) Proprietor: **Huawei Technologies Co. Ltd. Shenzhen, Guangdong 518129 (CN)**

(72) Inventors:
- **KANT, Shashi**
**S-223 69 Lund (SE)**
- **PRIYANTO, Basuki Endah**
**S-223 69 Lund (SE)**

(74) Representative: **Körber, Martin Hans et al Mitscherlich PartmbB Patent- und Rechtsanwälte Sonnenstrasse 33 80331 München (DE)**

(56) References cited:
- **JENSEN T L ET AL: "Mutual Information Metrics for Fast Link Adaptation in IEEE 802.11n", IEEE INTERNATIONAL CONFERENCE ON COMMUNICATIONS, 2008 : ICC '08 ; 19 - 23 MAY 2008, BEIJING, CHINA, IEEE, PISCATAWAY, NJ, USA, 19 May 2008 (2008-05-19), pages 4910-4915, XP031266241, ISBN: 978-1-4244-2075-9**
- **STEVEN REECE ET AL: "The Near Constant Acceleration Gaussian Process Kernel for Tracking", IEEE SIGNAL PROCESSING LETTERS, IEEE SERVICE CENTER, PISCATAWAY, NJ, US, vol. 17, no. 8, 1 August 2010 (2010-08-01) , pages 707-710, XP011311077, ISSN: 1070-9908**

**Description**

Technical Field

The aspects of the present disclosure relate generally to communication systems employing link feedback and in particular to fast link adaptation techniques.

Background

The proliferation of modern wireless communications devices, such as cell phones, smart phones, and tablet devices, has seen an attendant rise in demand for large multimedia data capabilities such as streaming video, TV, music, and internet access at the user equipment (UE) or mobile station (MS). To support this ever increasing demand for higher data rates new communications standards are being developed based on technologies such as multiple input and multiple output (MIMO), Orthogonal Frequency Division Multiple Access (OFDMA, and bit interleave coded modulation (BICM). Examples of these standards include Long Term Evolution (LTE) and LTE-Advanced (LTE-A) being developed by the third generation partnership project (3GPP), the 802.11 and 802.16 family of wireless broadband standards maintained by the Institute of Electric and Electronic Engineers (IEEE), WiMAX, an implementation of the IEEE 802.11 standard from the WiMAX Forum, as well as others.

The quality of data transmitted over wireless communication channels is often complicated by the volatility of the medium which suffers from affects such as fading, interference from other users, variability between UE devices, etc. It is well known that adapting system parameters, such as the modulation coding scheme (MCS) or transmit power, in accordance with current channel conditions can significantly improve overall throughput. However, adaptation of the communication link, or link, between a transmitter and a receiver requires a transmitter to have accurate knowledge of the current channel state information (CSI) of the link.

To accommodate this, modem communications systems, such as those mentioned above, include some type of feedback mechanism to allow closed loop adaptation of the link between the transmitter, which may be located in a base transceiver station or eNodeB and the receiver which may be located in the MS or UE. For example 3GPP's LTE and LTE-A standards include provisions for sending CSI from a UE or MS back to the transmitter where this CSI is used to select transmit parameters such as the modulation and coding scheme (MCS) and/or pre-coding matrix and/or number of rank. LTE includes several types of CSI including a channel quality indicator (CQI), rank indicator (RI), and a pre-coding matrix indicator (PMI). The CQI is an integer value between one and fifteen where each CQI value, loosely speaking, corresponds to one of twenty nine MCS available for data transmission over the physical downlink shared channel (PDSCH) excluding HARQ re-transmission. In this scheme higher CQI values correspond to higher throughput MCS. Hereafter, CQI and MCS are interchangeably used.

The process of determining an appropriate CSI value at the receiver, sending the CSI to the transmitter, and modifying the link based on the received CSI is known as Link Adaptation (LA) and is often used in systems employing MIMO-OFDMA technologies, such as the PDSCH defined in 3GPP LTE rel-8. The goal of LA is to adjust transmission parameters, such as the MCS and/or pre-coding matrix and/or number of rank, such that average throughput of the physical layer is maximized while maintaining the block error rate (BLER), a typical quality of service QoS metric used in wireless and other communication systems, below a given threshold. The BLER threshold used in mobile communication systems is typically about 0.1, or 10%, and may be adjusted up or down depending on the desired QoS.

In mobile communication system link adaptation schemes are typically implemented for transmissions from a radio base station to the MS, known as the down link (DL), but can also be used to improve up link (UL) transmissions as well. To implement LA a receiver receives a transmission containing a packet of data and computes link quality metrics (LQMs) based on the received signals. The receiver then determines appropriate CSI values and sends them to the transmitter where they are used to select link parameters for subsequent data transmissions. A wireless radio link is a very volatile medium so that by the time a CSI value is computed sent to the transmitter and used to adapt link parameters, the link may have changed sufficiently to render the adaptation less than optimal. Therefore link throughput can be improved if instead of simply computing the current CSI and returning it to the transmitter, the receiver should attempt to predict what the future CSI will be at the time the modified transmission scheme is used. Thus LA methods need to predict optimal CSI for the next transmission given the current and past channel information. Since the radio link is constantly and rapidly changing, LA algorithms used for CSI prediction must adjust themselves fast enough to track these changes. Algorithms that are capable of adjusting to these rapid link variations are referred to as fast link adaptation (FLA).

FLA can be a difficult and challenging problem. Making adjustments to transmission parameters in a dynamic and harsh environment which is subject to variations such as slow or fast fading scenarios, heterogeneous networks, and interference, as well as changing UE conditions due to movement, temperature, and variations between the UE, in order to maximize average throughput performance and maintain acceptably low BLER presents many difficulties. A desirable FLA technique should satisfy a number of constraints including the following:

- The FLA technique should be able to recommend a suitable MCS/CQI in any practical mobile environment in order to maximize the average throughput while maintaining the BLER below a given threshold;
- The FLA technique should have a "fast" adaptation rate such that it can closely track changes in channel qualities;
- The number of parameters and/or look-up tables (LUTs) must be kept small under different channel conditions and the complexity of the computations must be constant;
- The FLA technique should be able to perform well with both linear and non-linear channel equalizers, imperfect channel and noise co-variance knowledge, and radio frequency (RF) imperfections.

A number of solutions to the FLA problem have been proposed and each has its advantages and disadvantages. The classical approach uses a link quality metric (LQM) with or without calibration and correction such as mean mutual-information per coded bit mapping (MMIBM). In this approach a scalar link quality metric (LQM) is obtained by utilizing the set of post-processing signal to interference plus noise ratios (SINR) of an employed equalizer. However, the closed form post processing SINR is known only for linear minimum mean square error (LMMSE) type equalizers. For other types of equalizers, such as the maximum likelihood (ML) type equalizers, some approximations are needed. After obtaining a scalar LQM for respective transmission parameters, such as MCS, the classical approaches find the corresponding BLER from a mapping of LQM-to-BLER which is typically created offline. This offline mapping or lookup table (LUT) is obtained under Additive White Gaussian Noise (AWGN) channel conditions for respective MCSs and considered transport block size. Thereafter, an appropriate MCS scheme having highest spectral efficiency is recommended such that the predicted BLER of the considered MCS scheme is below a desired threshold. The threshold for the predicted BLER is obtained from simulations such that the average BLER meets the constraints imposed by the desired QoS. This "classical" approach is well studied empirically in the literature and provides good performance in a calibrated setup. Unfortunately, finding the calibration/correction factors requires long and tedious simulations for every required MCSs and channel condition. Several LUTs are also required for different transport sizes making this approach prohibitive for LTE/LTE-A based systems. It is also difficult to find appropriate correction factors when non-linear or ML-type equalizers are used. In real systems, radio frequency (RF) imperfections are inevitable and will have a negative impact on performance since correction factors cannot be tuned for all types of real world variations and imperfections.

FLA techniques based on Support Vector Machines (SVM) have also been formulated. These methods use SVM to learn the mapping between the mean or ordered post-processing SINRs and the BLER for each candidate MCS in real time or online. This learned mapping is updated regularly and is utilized to predict the BLER performance of the respective set of supported MCS schemes. The predicted BLER values can then be used to select and recommend a MCS scheme for the next packet of data. SVM based FLA can outperform the classical LQM/LUT based approach and can also cope with some types of RF and non-linear imperfections. However, the SVM based methods suffer from large memory consumption, complexity cost that is not low enough to be easily employed in current state of the art digital signal processing (DSP) devices, and they require offline a priori training which becomes time consuming and expensive. It is still not known how well SVM based FLA techniques can work under non-stationary scenarios or if they can track system changes appropriately.

Another approach to LA is an online kernel method (OKM) referred to as quantized kernel least mean squares (QKLMS). QKLMS is similar to the SVM approach where it learns the mapping between mean or ordered post-processing SINRs and the BLER, but is less complex and has lower memory requirements than the currently known SVM approaches. While QKLMS offers some advantages there are however problems with this approach. QKLMS has poor tracking capabilities and is more accurately characterized as a "slow" LA technique. The free hyper-parameters of QKLMS need to be found by an exhaustive and time consuming offline grid search. Additional research is needed to determine how an appropriate MCS should be selected from the available set of MCSs. The input to OKMs is either an average post-processing SINR or ordered set of post-processing SINRs of an equalizer which both have a very high dynamic range thereby lowering the potential gain offered by the OKMs.

Further related prior art is disclosed in Jensen et al "Mutual Information Metrics for Fast Link Adaptation in IEEE 802.11n", IEEE International Conference on Communications, 2008 : ICC '08 ; 19 - 23 May 2008, Beijing, China, IEEE, Piscataway, NJ, USA, 19 May 2008, pages 4910-4915, which forms the preambles of the independent claims.

Accordingly, it would be desirable to provide a FLA technique that can solve at least some of the problems outlined above.

SUMMARY

On the above background it is an object of the present invention to provide equipment and methods by means of which it is possible to improve data transmission rates in a communication link which employs link adaptation feedback, in particular, but not exclusively, for selecting CSI at a receiver.

It is a further object of the present invention to provide equipment and methods for FLA operable to adapt or recommend suitable CSI values in a dynamic environment in order to maximize the average throughput of a communications link while holding the average BLER below a desired threshold. These equipment and methods provide a "fast" adaptation rate such that rapid changes in channel state can be closely tracked.

It is a further object of the present invention to provide equipment and methods for FLA operable to keep the number of parameters and/or look-up tables (LUTs) small under different channel conditions and maintain a constant complexity of the computations.

It is a further object of the present invention to provide equipment and methods for FLA operable to perform well with both linear and non-linear channel equalizers, in stationary and non-stationary environments, and with imperfect channel and noise co-variance knowledge, and with radio frequency (RF) imperfections.

The above and further objects and advantages are according to the present invention obtained by using a Gaussian Processes (GP) system model that can adapt and update its model parameters to rapidly track changes in the channel state of a communication link. The updated GP system model is then used to predict BLER performance of future transmissions for a desired set of CSI, and the CSI associated with the highest throughput that also maintains the predicted BLER below a predetermined threshold is selected.

According to a first aspect of the present invention, the above and further objects and advantages are obtained by a transceiver operable for selecting channel state information (CSI) of a communication link according to claim 1. In a first possible implementation form of the transceiver according to the first aspect, using a GP system model to update the model parameters comprises updating the model parameters based on the generated set of CRC results, the buffered set of LQM and a dictionary of training data. The dictionary of training data is updated based on the buffered set of LQM, the generated CRC results, and a CSI of the received data signal.

In a second possible implementation form of the transceiver according to the first possible implementation form of the first aspect, the dictionary of training data comprises a plurality of buffered sets of LQM, at least one set of CRC results associated with each set of LQM, and the associated set of CSI.

In a third possible implementation form of the transceiver according to the second possible implementation form of the first aspect, the dictionary of training data is enhanced by associating all lower throughput CSI in the set of supported CSI with a CRC result of pass when the generated CRC results for the current CSI is a pass, and associating all higher throughput CSI in the set of supported CSI with a CRC result of fail when the generated CRC result for the current CSI is a fail.

In a fourth possible implementation form of the transceiver according to the first aspect as such or to the first through third possible implementation forms of the first aspect, the GP system model is a non-recursive GP system model.

In a fifth possible implementation form of the transceiver according to the first aspect as such or to the first through third possible implementation forms of the first aspect, the GP system model is a recursive system model.

In a sixth possible implementation form of the transceiver according to the first aspect, generating a set of mean-MI comprises generating mutual information (MI) values for each RE in the received data signal based on a linear equalizer assumption and the received data signal is conditioned with non-linear equalization, and generating the set of effective mean-MI based on the generated MI values.

In a seventh possible implementation form of the transceiver according to the fourth or fifth possible implementation forms of the first aspect, the GP system model comprises a set of GP system models where each GP system model in the set of GP system models is configured to predict the BLER for a particular CSI, and when the CSI associated with the received data signal is not associated with any of the set of GP system models, the GP system model associated with the nearest CSI is updated.

In an eighth possible implementation form of the transceiver according to the first aspect as such or to any of the preceding first through seventh possible implementation forms of the first aspect, the CSI value is a wide-band channel quality indicator (CQI), a sub-band CQI, a rank indicator, a wideband pre-coding matrix indicator (PMI), or a sub-band PMI.

In a ninth possible implementation form of the transceiver according to the first aspect as such or to any of the preceding first through eighth possible implementation forms of the first aspect, the communications link comprises a wireless communication link, and the receiver comprises a radio frequency (RF) unit.

In a tenth possible implementation form of the transceiver according to the first aspect as such or to any of the preceding first through ninth possible implementation forms of the first aspect, the communication link comprises an orthogonal frequency division multiple access (OFDMA) type communication link.

In an eleventh possible implementation form of the transceiver according to the tenth possible form of the first aspect, the system comprises non-linear equalization or linear equalization.

In a twelfth possible implementation form of the transceiver according to the first aspect as such or to any of the preceding tenth through eleventh possible implementation forms of the first aspect, the system is a user equipment comprising a user interface and a display.

According to a second aspect of the present invention, the above and further objects and advantages are obtained by a computer program product according to claim 14.

These and other aspects, implementation forms, and advantages of the exemplary embodiments will become apparent from the embodiments described below considered in conjunction with the accompanying drawings. It is to be understood, however, that the description and drawings are designed solely for purposes of illustration and not as a definition of the limits of the invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

BRIEF DESCRIPTION OF THE DRAWINGS

In the drawings:

Figure 1 illustrates a block diagram of a simplified LTE receiver incorporating aspects of the disclosed embodiments.
Figure 2 illustrates a flowchart of an exemplary method for selecting channel state information incorporating aspects of the disclosed embodiments.
Figure 3 illustrates training and prediction modes of GP system models for wideband-CQI prediction incorporating aspects of the disclosed embodiments.
Figure 4 illustrates graphs of aggregate throughput for a physical downlink shared channel incorporating aspects of the present disclosure.
Figure 5 illustrates graphs of average BLER for a physical downlink shared channel incorporating aspects of the present disclosure.
Figure 6 illustrates graphs showing tracking performance of LA techniques incorporating aspects of the present disclosure.
Figure 7 illustrates a block diagram of an apparatus appropriate for FLA incorporating aspects of the disclosed embodiments.

DETAILED DESCRIPTION

The embodiments disclosed herein avoid many of the problems of the prior art by employing novel FLA techniques based on the use of non-parametric Gaussian Processes (GP) regression/classification methods for online learning and BLER prediction. GPs are a non-parametric Bayesian approach for regression and classification that is more principled than the prior art techniques described above, and in addition to providing a predictive mean estimate, the GP based techniques also provide an uncertainty of the estimate (unlike in OKMs) which can be used to improve link adaptation. The disclosed GP based FLA techniques use a probabilistic approach to solving the challenging FLA problem and provide several advantages over prior art solutions while maintaining low complexity and memory requirements. Some of the desirable properties of the disclosed GP based FLA techniques are listed below:

- the disclosed GP based FLA mechanisms are able to adapt or recommend suitable CSI values in a dynamic environment in order to maximize the average throughput while holding the average BLER below a desired threshold;
- the disclosed GP based FLA techniques are able to operate acceptably in both a stationary and non-stationary environment;
- the number of parameters is kept small;
- the complexity is kept fixed and constant and memory requirements are low; and
- the disclosed GP based FLA techniques are able to perform well with both linear and non-linear channel equalizers, imperfect channel state information, and RF imperfections.

Prior art OKM-LA systems use the post-processing SINR from MIMO equalizers as the LQM on which the adaptation is based. In contrast the presently disclosed embodiments use an effective mean mutual information (mean-MI) metric. A different type of mean-MI metric has been used in classical approaches, however the mean-MI metric used herein avoids the painful correction/calibration factors necessary to improve performance in other FLA techniques, such as MMIBM. Obtaining these correction/calibration factors requires extensive and time consuming simulations and once obtained the correction/calibration factors cannot normally handle RF impairments and are not that useful in systems employing strong channel encoders/decoders such as turbo coders or low-density parity check (LDPC) coders.

The general steps for GP based FLA can be summarized as follows:

- Compute a LQM for a received signal;

- Use the computed LQM and corresponding CRC results as input to the GP system model's online learning algorithm to update filter or model parameters of the GP system model;
- Use the updated model parameters in the GP system model to generate BLER predictions for each considered CSI;
- Use the BLER predictions to select appropriate CSI to be returned to the transmitter.

An added advantage of the GP based approaches described herein over the prior-art approaches is that they can obtain the free hyper-parameters in a principled way by evaluating the marginal likelihood.

For illustrative purposes and as an aid to understanding, an exemplary embodiment based on the 3GPP LTE Rel-8 standard will be described herein. In the presented embodiments the CSI chosen as a feedback value is the CQI which is sent to the transmitter where it is used for selection of a MCS. However the methods and apparatus disclosed herein are not so limited and those skilled in the art will readily recognize that other communication systems that provide methods of feeding back CSI from a receiver to the transmitter, such as for example, WCDMA, WiFi, WiMax, as well as other types of communication systems which may use other CSI, such as RI, or PMI, can be modeled in a similar way and advantageously employ the methods and apparatus of the present disclosure. Similarly many of the terms used herein have meanings consistent with their meanings in a LTE context; however it should be understood that other communication systems may use different terms for similar concepts and the embodiments disclosed herein can also be advantageously employed in these systems.

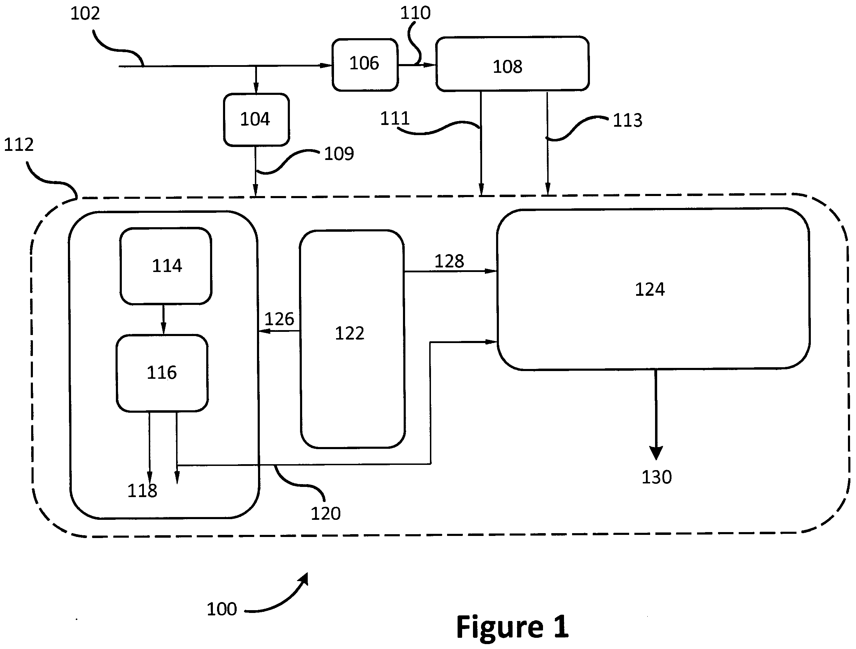

Referring now to Figure 1 there can be seen a block diagram illustrating one embodiment of a receiver system 100 for use in an OFDMA communication system incorporating aspects of the present disclosure. The illustrated receiver system 100 receives a symbol stream 102 of OFDM symbols which is separated into pilot symbols 110 and data symbols 109 by a pilot extractor 106 and data extractor 104 respectively. The symbol stream 102 is received over a communication link which may be a radio frequency link transmitted through air, or other type of link and medium as appropriate, and digitized before being forwarded to the extractors 104, 106. The extracted pilot symbols 110 are provided to an estimator 108 which produces channel estimates, 111, and noise-covariance estimates, 113 for use in subsequent computations. Assuming perfect time and frequency synchronization, the post fast Fourier transform (FFT) received signal vector, Y, at a given (LTE) resource element RE is shown in equation (1):

$$\mathbf{Y} = \mathbf{H}\mathbf{x} + \mathbf{u} \, , \, (1)$$

where $\mathbf{Y}$ is an element of a complex matrix $\mathbf{Y} \in \mathbb{C}^{N_R \times 1}$, $N_R$ is the number of receive antennas, $\mathbf{H} \in \mathbb{C}^{N_R \times N_L}$ corresponds to the channel matrix, $N_L = \min\{N_R, N_T\}$ represents the number of spatial layers where $N_T$ is the number of transmit antennas. A resource element RE in the context of an LTE system is the smallest time-frequency unit used to describe the physical downlink on which data is received and corresponds to one OFDM symbol and one OFDM subcarrier. The unknown data symbols 109 and known pilot symbols 110 may be represented by a complex vector $\mathbf{x} \in \mathbb{C}^{N_L \times 1}$, where $\mathbf{u} \in \mathbb{C}^{N_R \times 1}$ is a complex additive Gaussian white noise (AWGN) vector. After extracting the data 109 and pilot 110 symbol information accordingly, the channel estimates, 111, and noise-covariance estimates, 113, are generated by an estimator 108. The illustrated receiver system 100 uses pilot symbol aided channel estimation in the estimator 108. Alternatively other types of channel estimation may be used to obtain channel estimates 111, and noise-variance estimates 113. These estimates, 111, 113, are fed along with the extracted data symbols 109 to a processing section 112 where the data symbols 109 are decoded to produce the estimated information bits 118. Decoding is supported by control information 126 that is decoded and extracted from control channels by a control channel process 122. Generation of the information bits 118 is accomplished by a MIMO detector 114 and turbo decoding 116 which creates the estimated information bits 118 and associated CRC results 120. A GP system model 124 is used to estimate CSI 130 which may be returned to a transmitter (not shown) for link adaptation. The GP system model 124 receives the CRC results 120 from the decoder 116 along with other channel control information 128.

For example, in the illustrated embodiments the other channel control information 128 may include the CQI/MCS used to encode the information bits associated with the CRC result. The GP system model 124 may generate a variety of CSI, for example in the illustrated embodiment of an LTE receiver these CSI 130 may include a wideband-CQI, a rank indicator, a sub-band-CQI, a wideband pre-coding matrix indicator, and/or sub-band pre-coding matrix indicator. As will be discussed further below, the GP system model 124 generates BLER predictions to evaluate performance of various link parameters and produces appropriate CSI 130. The CSI 130 can be sent back to a radio base station or other radio transmitter (not shown) where they can be used to adapt the RF link accordingly. Further the CSI 130 can be used in a transmitter system connected to the receiver system 100 (e.g. when the transmitter system and the receiver system are both part of or form a transceiver system).

In the exemplary embodiment of a LTE system being used to illustrate GP based FLA the CSI 130 chosen for illustration is a wideband-CQI which as specified in LTE standards corresponds to one of twenty nine available MCS that may be used to transmit data to the UE. Alternatively, other CSI 130 may be generated accordingly depending on the requested CSI report from eNodeB (or in general from base station) using the disclosed GP system model based prediction techniques.

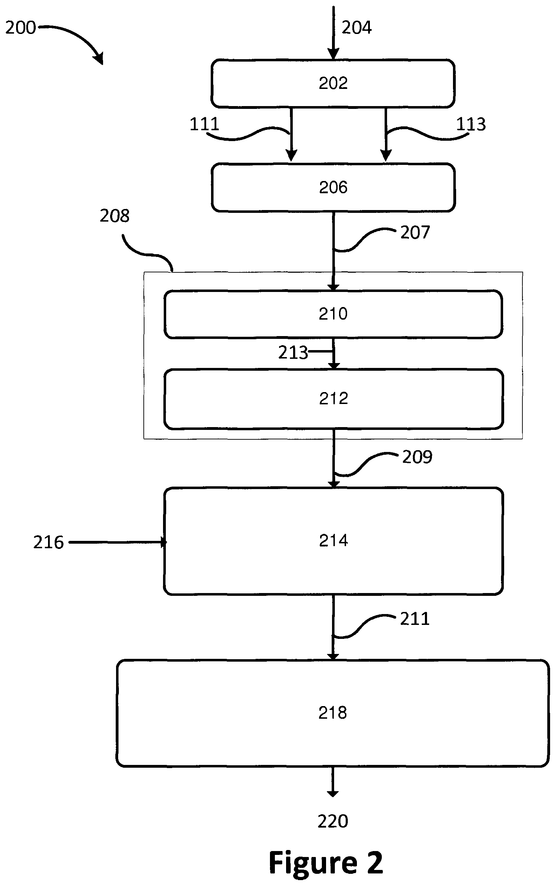

Figure 2 illustrates a flowchart of one embodiment of an exemplary method 200 for determining CSI incorporating a GP system model for BLER prediction. The exemplary method 200 may be used to derive a CQI value 220 or other CSI to provide closed loop link adaptation in an OFDMA or other type communication system. Channel estimates 111 and noise-covariance estimates 113, such as the channel and noise covariance estimates described above with reference to Figure 1 are received by a SINR computation process 206 to produce a set of post-equalization SINR 207. The post-equalization SINR 207 for an $n^{th}$ spatial layer and a considered RE is described by equation (2):

$$SINR_n = \frac{1}{\left[\left(\mathbf{H}^H \mathbf{R}_{uu}^{-1} \mathbf{H} + \mathbf{I}\right)^{-1}\right]_{n,n}} - 1, \, (2)$$

where the notation $[\mathbf{A}]_{m,n}$ represents the element at the $m^{th}$ row and $n^{th}$ column of a matrix A, and I is an identity matrix of appropriate dimensions.

A benefit of the GP techniques disclosed herein is that even if the receiver employs non-linear equalizers, such as ML type equalizers, the post-processing SINR values 207 may still be computed using an LMMSE equalizer assumption. This is because the GP based LA feedback estimator is surprisingly insensitive to the type of equalizers included in the system and learns the non-linear mapping from mean-MI to the CRC/BLER quite well. Thus, other information, such as the data-to-pilot power ratios, etc. is not necessary.

The post equalization SINR values 207 are used to compute 208 a LQM 209. The LQM chosen for the disclosed embodiments is a mean-MI metric because it has good features based on information theory and has been shown to be very stable through its use in the classical LUT based LA methods. In contrast, prior art LA approaches use both the mean and ordered set of the post-processing SINRs as a LQM. These prove to be poor LQMs for both LUT based and online learning based LA methods. The mean-MI metric disclosed herein avoids the need for extensive simulations to obtain correction/calibration factors as is necessary to improve FLA performance for other LQMs such as MMIBM. Computation 208 of the mean-MI LQM may be accomplished in two steps. Computation 208 begins by estimating the MI 210 for each RE and for each spatial layer (for a given rank hypothesis) for the given modulation alphabet used in the considered CQI/MCS at the considered REs. The MI 213 can be estimated using the computed post-processing SINR 207 for the respective modulation alphabet. For example, the estimation formula for a few modulation alphabets - quadrature phase shift key (QPSK), 16 state quadrature amplitude modulation (16QAM), and 64 state QAM - are shown in Table 1.

| Table 1. | |
|---|---|
| Modulation Alphabet | MI per symbol and given *n*-th spatial layer |
| QPSK | $\mathrm{MI}_n = J\left(2\sqrt{SINR_n}\right)$ |
| 16QAM | $\mathrm{MI}_n \approx \left(\frac{1}{2}\right)J\left(0.8818\sqrt{SINR_n}\right)$ $+ \left(\frac{1}{4}\right)J\left(1.6764\sqrt{SINR_n}\right)$ $+ \left(\frac{1}{4}\right)J\left(0.9316\sqrt{SINR_n}\right)$ |
| 64QAM | $\mathrm{MI}_n \approx \left(\frac{1}{3}\right)J\left(1.1233\sqrt{SINR_n}\right)$ $+ \left(\frac{1}{3}\right)J\left(0.4381\sqrt{SINR_n}\right)$ $+ \left(\frac{1}{3}\right)J\left(0.4765\sqrt{SINR_n}\right)$ |
| where, | |

(continued)

| Table 1. |
| --- |
| $$J(a) \approx \begin{cases} -0.04210610\,a^3 + 0.209252\,a^2 - 0.00640081\,a, & 0 < a < 1.6363 \\ 1-\exp\!\left(0.00181491a^3 - 0.142675a^2 - 0.08220540\,a + 0.0549608\right), & 1.6363 < a < \infty. \end{cases}$$ |

The MI estimates 213 are used to compute 212 a mean-MI per codeword 209 over all the layers within a codeword and the considered REs within a reporting subframe. A codeword is the result of a mapping or channel coding that maps transport blocks or packages of data received from the media access control (MAC) layer into different codewords containing data bits and CRC bits. The codewords then go through a process known as modulation which generates complex-valued OFDM baseband signals that may then be upconverted to the carrier frequency. Alternatively, in a non-OFDM type communication system, the codewords may be prepared for transmission using a different modulation and upconverting scheme. In all these schemes, each block of bits or codeword is converted to a data signal then the data signal is transmitted to a receiver over a link. The set of mean-MI 209 can be found using an arithmetic mean as shown in equation (3):

$$\text{mean-MI} = \left(\frac{1}{\gamma}\right)\sum_n \sum_{k \in \text{REs}} \text{MI}_n[k], \; (3)$$

where $\gamma$ is a normalization constant. In alternate embodiments a geometric mean may be used to compute the set of mean-MI 209. The MI needs to be obtained for all the modulation alphabets within the set of considered CQI.

A prediction process 214 uses the set of mean-MI 209 along with CRC results 216 to generate a set of BLER predictions for each CSI (in the specific embodiment shown in Fig.2 the CSI is a CQI) 211. As will be described in detail below, BLER prediction 214 is accomplished with a set of GP system models where each CQI index has its own GP system model. In certain embodiments all the GP system models may share the same processing steps but may have different dictionaries of training data and/or different model parameters. These GP system models have two modes of operation: a training mode and a prediction mode. Under prediction mode each GP system model of a respective CQI index renders the predicted BLER based on the set of estimated mean-MI 209 in the current sub-frame of the considered CQI. Under training mode the respective GP system models of each CQI index are trained or updated depending on the availability of CRC results for the respective CQI, and utilizing the buffered respective mean-MI computed in a previous subframe. The exact CRC result is only available for the received codeword so only one GP system model corresponding to the received CQI can be updated for each set of received data. This results in slightly slow training after the UE has been restarted or after long periods of discontinuous reception.

To expedite training of several GP system models for different CQI indices from a single set of received data, a CRC result can be estimated for CQI other than the CQI of the currently received codeword. When the CRC result of the received CQI is a pass, a CRC result for all lower CQI, i.e. CQI corresponding to lower throughput MCS, can also be assumed to have a CRC result of pass. Conversely, when the CRC result for the currently received CQI is a fail, then a CRC result for all higher CQI, i.e. CQI corresponding to a higher throughput MCS, can also be assumed to be a fail. Thus all GP system models corresponding to the current CQI and the higher or lower CQI according to the foregoing CRC assumption rules. For simplicity it can be assumed that in the case of HARQ retransmission the same CQI index of the initial transmission was used in the retransmission.

In certain embodiments an outer loop link adaptation (OLLA) may be included to assist the GP based FLA for faster learning. This OLLA can be considered to be employed at the receiver and/or transmitter.

A CQI 220 as an output or result of the method 200 is selected 218 by identifying the highest throughput CQI (i.e., the CQI corresponding to the MCS with maximum throughput), such that the predicted BLER for the selected CQI 220 is less than or equal to a predetermined threshold BLER such as for example a BLER of about 0.1. It is to be mentioned again, that also in this example embodiment the resulting CSI value is a CQI, according to further embodiments, other types of CSI values can also be generated by the method 200. The generated CQI 220 is then used for fast link adaption (i.e. an MCS corresponding to the CQI 220 is chosen).

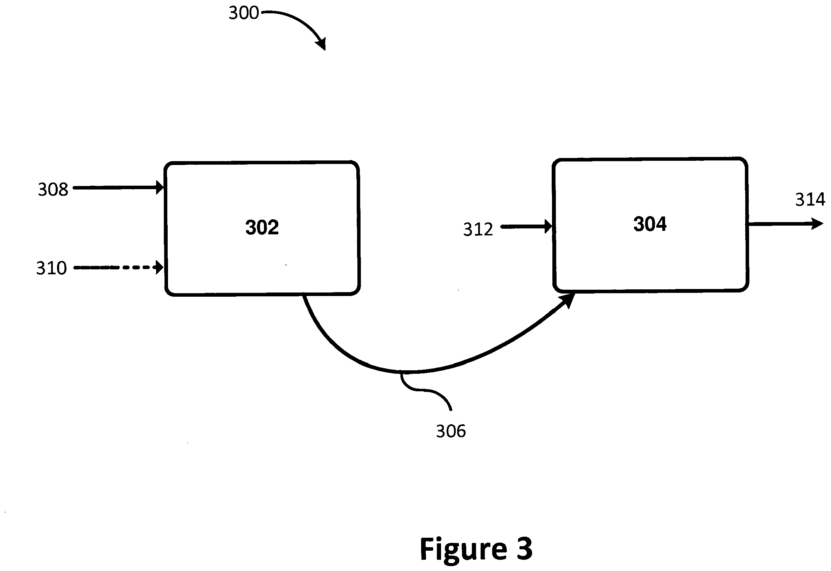

Figure 3 illustrates an application 300 of the training mode 302 and prediction mode 304 of a GP system model applied to prediction of BLER estimates 314 for selection of a wide-band CQI value. The prediction mode 304 receives LQM 312, which in certain embodiments may be a mean-MI value per codeword of the currently received codewords and uses a set of model parameters 306 computed by the training process 302 to produce BLER predictions 314 for use in selection of a recommended wide-band CQI. Each computation interval or iteration may be periodic such as for example corresponding to each received subframe, frame or other periodic unit of received data, or the iterations may be a-periodic such as reporting CSI when requested by a transmitter.

The training mode 302 receives a LQM 308 from a previous computation interval along with CRC results 310 from the current computation interval and updates the set of model parameters 306. Computation, selection, and transmission of a CQI takes a finite amount of time. For example it may take about 8 milliseconds to compute, select, and send a recommended CQI value to the transmitter. The transmitter will then take additional time to adapt system parameters and send data to the receiver. In LTE systems the transmitter delay may be the sub-frame time or about 1ms. Thus there is a delay, about 9ms in the foregoing example, between receiving a set of data, selecting a new CQI, and receiving CRC results based on data that was transmitted using the new CQI. To account for this in the GP system model, the training mode 302 uses delayed LQM 308, which in certain embodiments may be a set of mean-MI, along with CRC results 310 extracted from data that was transmitted in accordance with the CQI generated from the delayed LQM 308. The term link quality metric (LQM) is used interchangeably herein to refer to both the metric, i.e. function, and to the values computed with the metric. The delayed LQM may be referred to as a buffered set of LQM where LQM are stored in computer memory known as a buffer and retrieved at a later time. In certain embodiments hybrid automatic repeat request (HARQ) is used. In embodiments employing HARQ the UE may assume that each retried packet of data is encoded based on the CQI of the original transmission leading to larger delays and additional buffering.

As an aid to understanding it is instructive to consider a concrete example such as a 4x4 MIMO LTE system with a 20 MHz cell-bandwidth having a maximum of 100 physical resource blocks (PRB). Note that the concrete example presented here is only an aid to understanding, and should not be interpreted as limiting the disclosure in any way. In general there are 15 supported CQI in a typical LTE system. Notably LTE supports numerous codeblock sizes and it is well known that the largest codeblock size provides better BLER performance than the smallest codeblock size. Therefore the performance of different codeblock sizes (or allocated PRBs) needs to be considered when selecting CSI, such as CQI/PMI/RI, to be reported back to a transmitter.

When selecting CSI feedback values, a separate GP system model is used for each CQI and codeblock size combination resulting in the need to maintain a large number of GP system models. To reduce the number of GP system models, a subset of the possible codeblock sizes may be used. For example in a 20MHz bandwidth system there are a maximum of 100 PRBs and the chosen subset may contain a reduced number such as three codeblock sizes, or number of PRBs, corresponding to for example 6 PRBs, 50 PRBs, and 100 PRBs. This reduction results in 3 codeblock sizes and 15 supported CQI so to support both subband and wideband CQI feedback, 15 times 3 or forty five (45) GP system models are employed. In training mode, if the allocated bandwidth in the currently received subframe has 12 PRBs the CRC results are used to train the GP system models corresponding to the employed bandwidth, which in the current example would be the 15 GP system models associated with 6 PRBs. Similarly, if the allocated bandwidth in the next subframe is 38 PRBs, then the 15 GP system models (corresponding to the 15 supported CQIs) associated with the 50 PRBs are trained by utilizing the current CRC results and the buffered/delayed LQM. In the current example the wideband GP system models are assumed to be associated with the 100 PRB GP system models. In prediction mode, the receiver computes both a wideband and a set of subband LQM, and then predicts the BLER using the respective GP system models.

When selecting PMI/RI feedback values in an example LTE system as described above, there is a set of GP system models for each rank hypothesis resulting in 3 (bandwidths) times 15 (supported CQI) times 4 (rank hypotheses) resulting in 180 GP system models. The complexity cost of the purposed GP FLA is dominated by the window or dictionary size. With a dictionary size of about 3 to 5, the implementation cost of 180 GP system models is easily handled in a typical receiver. For selection of PMI feedback, the receiver can implement 180 GP system models for each PMI, or alternatively the system may be simplified by first determining a suitable PMI from the LQM without a GP system model.

GP system models are based on kernel functions, which implicitly map the low-dimensional input data to a very high dimensional output data in order to perform and exploit linear functions for regression and classification. This mapping can be viewed as a distribution over the functions. The free hyper-parameters associated with the GP system models can be obtained or learnt by maximizing the marginal likelihood. This is typically more efficient than performing a standard grid search of the numerous free parameters.

In one embodiment the GP based FLA method includes a non-recursive or sliding-window GP system model to determine the channel quality information to be fed back to the transmitter. A non-recursive or sliding-window GP system model uses a dictionary containing the training datum corresponding to data collected during a time interval or window of time, where the window slides forward in time as time progresses. Continuing with the LTE example for a candidate CQI of a codeword there will be a finite number, M, pairs of training data in the dictionary or window where each pair includes the mean-MI of a given packet of data or sub-frame, delayed by the reporting delay as described above, and the corresponding CRC result and CQI value.

A non-recursive or sliding-window GP system model as one possible implementation for the GP system model 124 and which can be used in step 214 of the method 200 uses two stages for CQI selection:

- A first stage computes the effective/mean-MI for each codeword corresponding to wideband or sub-band CQI;
- The second stage consists of a training step and a prediction step:

  a. During training/update, when there is a CRC result for the given CQI, the CRC result including the corresponding (delayed) mean-MI of a considered modulation alphabet of the CQI candidate is passed to the non-recursive GP system model to compute the filter coefficients, and the mean-MI/CQI/CRC datum is used to update the dictionary.
  b. During prediction, the filter coefficients are used along with the current mean-MI values to predict BLER values for each considered CQI/MCS.

Note that the input/output pairs of mean-MI/CRC within the window are buffered, i.e. stored in memory for later retrieval, for both the training or model parameter computation, and also the BLER prediction mode. However, the training mode is only activated for a considered CQI if a CRC result is available for that CQI or has been estimated as discussed above.

The set of input/output datum pairs of mean-MI and corresponding delayed CRC result contained in the dictionary $\mathcal{D}^{\mathrm{CQI}}$ can be expressed by equation (4):

$$\mathcal{D}^{\mathrm{CQI}} \equiv \{mMI_i, CRC_i\}_{i=0}^{M-1} \qquad (4)$$

where: $mMI_i$ corresponds to the mean-MI at an $i^{th}$ instance or index within the dictionary; $CRC_i$ corresponds to the CRC result at an $i^{th}$ instance or index within the dictionary; and $M$ is an integer value representing the dictionary size. It should be noted that the set of input-output pairs in the dictionary $\mathcal{D}^{\mathrm{CQI}}$ does not need to be continuous in the time or subframe sense; the $i^{th}$ index may simply represent an index identifying a datum pair within the dictionary. A regression mapping or (non-linear) mapping from mean-MI, $mMI,$ to CRC (or equivalently BLER) can be described by equation (5):

$$\begin{aligned} \mathrm{CRC} &= f\left(mMI\right) + \varepsilon \\ &= \mathbf{w}^{T} \varphi\left(mMI\right) + \varepsilon, \end{aligned} \qquad (5)$$

where $f(.)$ is a latent or unknown function that maps the input mean-MI to the CRC output, w is a column vector of weights of the linear regression model, $\varphi(mMI)$ corresponding to the feature space, and $\varepsilon$ corresponds to the modeling error which is modeled as independent and identically distributed (IID) Gaussian noise with zero mean and variance $\sigma_{\varepsilon}^{2}$, $\varepsilon \sim \mathcal{N}\left(0, \sigma_{\varepsilon}^{2}\right).$

For FLA there is a need to predict the CRC/BLER result that will be produced by the currently computed (i.e., the current subframe or time interval) mean-MI based on the set of training data $\mathcal{D}^{\mathrm{CQI}}$ of a considered CQI candidate. For simplicity let the set of input data in the set of training data $\mathcal{D}^{\mathrm{CQI}}$ (for brevity $\mathcal{D}^{\mathrm{CQI}}$ is also shown without the super script as $\mathcal{D}$) be denoted as a vector of real numbers $\mathcal{X} \equiv \{mMI_i\} \in \mathbb{R}^{t \times 1}$ (assuming that $t < M$) and the set of the CRC results be denoted as a vector of binary values $\mathcal{Y} \equiv \{CRC_i\} \, \mathbb{B}^{t \times 1}$ where $\mathbb{B} \in \{0,1\}$. The likelihood of the weights can be described by equation (6):

$$p(\mathcal{Y}|\mathcal{X}, \mathbf{w}) = \prod_{i=0}^{t-1} p(\mathrm{CRC}_i | mMI_i, \mathbf{w})$$

$$= \prod_{i=0}^{t-1} \frac{1}{\left(2\pi\sigma_\varepsilon^2\right)^{1/2}} \exp\left(-\frac{\left|\mathrm{CRC}_i - \mathbf{w}^T \phi(mMI_i)\right|^2}{2\sigma_\varepsilon^2}\right) \quad (6)$$

$$= \frac{1}{\left(2\pi\sigma_\varepsilon^2\right)^{t/2}} \exp\left(-\frac{\left\|\mathcal{Y} - \mathbf{w}^T \phi(\mathcal{X})\right\|^2}{2\sigma_\varepsilon^2}\right).$$

Thus, the likelihood of the weights follows a Gaussian distribution with the mean $\mathbf{w}^T \phi(\mathcal{X})$ and variance $\sigma_\varepsilon^2$, i.e.,

$$p(\mathcal{Y}|\mathcal{X}, \mathbf{w}) \sim \mathcal{N}(\mathbf{w}^T \phi(\mathcal{X}), \sigma_\varepsilon^2 \mathbf{I}).$$

Assuming that the prior distribution over the weights is Gaussian distributed with zero mean and covariance matrix $\Sigma$, $\mathbf{w} \sim \mathcal{N}(0, \Sigma)$; the posterior distribution over the weights is given by equation (7):

$$p(\mathbf{w}|\mathcal{Y}, \mathcal{X}) = \frac{p(\mathcal{Y}|\mathcal{X}, \mathbf{w})p(\mathbf{w})}{p(\mathcal{Y}|\mathcal{X})}$$

$$= \frac{p(\mathcal{Y}|\mathcal{X}, \mathbf{w})p(\mathbf{w})}{\int p(\mathcal{Y}|\mathcal{X}, \mathbf{w})p(\mathbf{w})d\mathbf{w}} \quad (7)$$

$$\propto \frac{1}{\left(2\pi\sigma_\varepsilon^2\right)^{t/2}} \exp\left(-\frac{\left\|\mathcal{Y} - \mathbf{w}^T \phi(\mathcal{X})\right\|^2}{2\sigma_\varepsilon^2}\right) \exp\left(-\frac{\mathbf{w}^T \Sigma^{-1} \mathbf{w}}{2}\right).$$

Equation (7) can be re-written as equation (8):

$$p(\mathbf{w}|\mathcal{Y}, \mathcal{X}) \propto \exp\left(-\frac{1}{2}(\mathbf{w}-\overline{\mathbf{w}})^T \left(\frac{\phi(\mathcal{X})\phi^T(\mathcal{X})}{\sigma_\varepsilon^2} + \Sigma^{-1}\right)(\mathbf{w}-\overline{\mathbf{w}})^T\right), \quad (8)$$

where

$$\overline{\mathbf{w}} = \sigma_\varepsilon^{-2}\left(\frac{\phi(\mathcal{X})\phi^T(\mathcal{X})}{\sigma_\varepsilon^2} + \Sigma^{-1}\right)^{-1} \phi(\mathcal{X})\mathcal{Y}.$$

Thus, for convenience, the posterior distribution over the weights can be denoted as shown in equation (9):

$$p(\mathbf{w}|\mathcal{Y}, \mathcal{X}) \sim \mathcal{N}(\overline{\mathbf{w}}, \Sigma_a^{-1}), \quad (9)$$

where $\Sigma_a = \left(\frac{\phi(\mathcal{X})\phi^T(\mathcal{X})}{\sigma_\varepsilon^2} + \Sigma^{-1}\right)$, and

$$\overline{\mathbf{w}} = \sigma_\varepsilon^{-2} \Sigma_\mathbf{a}^{-1} \phi(\mathcal{X})\mathcal{Y} .$$

This shows the predictive distribution on the CRC result for the currently computed mean-MI, $mMI_t$ is obtained by averaging the output of all possible linear models with respect to the posterior on the weights as shown in equation (10):

$$
\begin{aligned}
p\big(f(mMI_t)\big|mMI_t, \mathcal{D}\big) &= \int p\big(f(mMI_t)\big|mMI_t, \mathbf{w}\big)p(\mathbf{w}|\mathcal{D})d\mathbf{w} \\
&= \int p\big(f(mMI_t)\big|mMI_t, \mathbf{w}\big)p(\mathbf{w}|\mathcal{Y}, \mathcal{X})d\mathbf{w} \quad (10) \\
&= \mathcal{N}\big(\phi^T(mMI_t)\overline{\mathbf{w}}, \phi^T(mMI_t)\Sigma_\mathbf{a}^{-1}\phi(mMI_t)\big).
\end{aligned}
$$

The predictive distribution shown in equation (10) can be rewritten via the matrix inversion lemma and applying the so-called Kernel trick to find the predictive mean as shown in equation (11) and covariance as shown in equation (12):

$$
\begin{aligned}
\bar{f}(mMI_t) = \mu_{f(mMI_t)} = \hat{CRC}_t &= \kappa^T(mMI_t, \mathcal{X}) \underbrace{\big[\kappa(\mathcal{X}, \mathcal{X}) + \sigma_\varepsilon^2\mathbf{I}\big]^{-1}\mathcal{Y}}_{= \mathbf{\alpha}} \\
&= \kappa^T(mMI_t, \mathcal{X})\mathbf{\alpha} \qquad\qquad (11) \\
&= \sum_{i=0}^{t-1}\alpha_i\, \kappa(mMI_t, mMI_i) \ ,
\end{aligned}
$$

$$
\begin{aligned}
\mathrm{Cov}\big(f(mMI_t)\big) = \sigma^2_{f(mMI_t)} = \\
= \kappa(mMI_t, mMI_t) - \kappa^T(mMI_t, \mathcal{X})\big[\kappa(\mathcal{X}, \mathcal{X}) + \sigma_\varepsilon^2\mathbf{I}_t\big]^{-1}\kappa(mMI_t, \mathcal{X}), \quad (12)
\end{aligned}
$$

where $\kappa(mMI_t, \mathcal{X}) \in \mathbb{R}^{t\times1}$ is a vector describing the similarity of the currently available input datum $mMI_t$ with all the input data $\chi$ within the dictionary $\mathcal{D}^{CQI}$ by computing a kernel function element wise.

For example, the Gaussian kernel, also known as the radial basis function (RBF), is given as

$$\kappa(x, y) = \exp\left(-\frac{|x - y|^2}{2l^2}\right),$$ where $l$ is called the kernel width and is a free-parameter (which needs to be tuned or can be obtained automatically from the given dictionary $\mathcal{D}^{CQI}$) including the variance $\sigma_\varepsilon^2$. Similarly, $\kappa(\mathcal{X}, \mathcal{X}) \in \mathbb{R}^{t\times t}$ is a covariance matrix obtained by computing the kernel function for every combination of the input and output data within the given set. The value $\alpha_i$ is generally a time-varying filter coefficient.

The non-recursive GP system model discussed above requires online matrix inversion (equation 11) which can be computationally expensive for real systems especially for larger window sizes. Alternatively a recursive GP system model may be used for FLA. One such recursive GP system model may be referred to as kernel recursive least squares with tracking, KRLS-T. The full or non-recursive GP system model described above can be re-formulated in the recursive form.

Denoting $\quad \mathbf{K}_{t-1} = \kappa(\mathcal{X}, \mathcal{X}), \qquad \mathbf{C}_{t-1}^{-1} = \big[\kappa(\mathcal{X}, \mathcal{X}) + \sigma_\varepsilon^2\mathbf{I}\big]^{-1} = \big[\mathbf{K}_{t-1} + \sigma_\varepsilon^2\mathbf{I}\big]^{-1} \quad,\quad$ and

$\mathbf{k}_t = \kappa(mMI_t, \mathcal{X})$, equation (11) and equation (12) can be re-written as:

$$\bar{f}(mMI_t) = \mu_{f(mMI_t)} = \hat{CRC}_t = \mathbf{k}_t^T\, \mathbf{C}_{t-1}^{-1}\mathcal{Y}, \quad (13)$$

$$\mathrm{Cov}\left(f\left(mMI_t\right)\right) = \sigma^2_{f(mMI_t)} = \kappa\left(mMI_t, mMI_t\right) - \mathbf{k}_t^T \mathbf{C}_{t-1}^{-1} \mathbf{k}_t, \quad (14)$$

respectively.

Considering the linear model for mapping mean-MI to CRC estimate (or equivalently to BLER estimate) described in equation (5), the predictive distribution of the CRC can be obtained using equation (13) and equation (14) as shown in equation (15):

$$p\left(\mathrm{CRC}\,|\,\mathcal{X}, \mathcal{D}\right) = \mathcal{N}\left(\mu_{f(mMI_t)} = \mu_{\mathrm{CRC}},\ \sigma^2_{\mathrm{CRC}} = \sigma^2_{f(mMI_t)} + \sigma^2_\varepsilon\right). \quad (15)$$

In order to obtain a recursive GP system model for CRC/BLER prediction, the predictive mean ($\mu_{f(\cdot)}$) and covariance ($\sigma^2_{f(\cdot)}$) for the data in the set $\mathcal{D} \equiv \{mMI_i,\ \mathrm{CRC}_i\}_{i=0}^{t-1}$ up to the $(t\text{-}1)$-th samples are shown in equations (16) and (17) respectively:

$$\mu_{f\left(\{mMI\}_{i=0}^{t-1}\right)} = \mu_{t-1} = \mathbf{K}_{t-1}^T\ \mathbf{C}_{t-1}^{-1}\ \mathcal{Y},\quad (16)$$

$$\Sigma_{f\left(\{mMI_i\}_{i=0}^{t-1}\right)} = \Sigma_{t-1} = \mathbf{K}_{t-1} - \mathbf{K}_{t-1}^T \mathbf{C}_{t-1}^{-1} \mathbf{K}_{t-1}.\quad (17)$$

When new datum is available ($mMI_t$, $\mathrm{CRC}_t$) under the training mode, then the recursive update of the mean and covariance is given by equation (18) and equation (19) respectively:

$$\mu_t = \begin{bmatrix} \mu_{t-1} \\ \mu_{f(mMI_t)} \end{bmatrix} - \left(\frac{\mu_{f(mMI_t)} - \mathrm{CRC}_t}{\sigma^2_{\mathrm{CRC}_t}}\right)\begin{bmatrix} \mathbf{h}_t \\ \sigma^2_{f(mMI_t)} \end{bmatrix},\quad (18)$$

$$\Sigma_t = \begin{bmatrix} \Sigma_{t-1} & \mathbf{h}_t \\ \mathbf{h}_t^T & \sigma^2_{f(mMI_t)} \end{bmatrix} - \left(\frac{1}{\sigma^2_{\mathrm{CRC}_t}}\right)\begin{bmatrix} \mathbf{h}_t \\ \sigma^2_{f(mMI_t)} \end{bmatrix}\begin{bmatrix} \mathbf{h}_t^T & \sigma^2_{f(mMI_t)} \end{bmatrix},\quad (19)$$

where $\mathbf{h}_t = \Sigma_{t-1}\mathbf{K}_{t-1}^{-1}\mathbf{k}_t = \left(\mathbf{I} - \mathbf{K}_{t-1}\mathbf{C}_{t-1}^{-1}\right)\mathbf{k}_t$.

At the next update, new datum ($mMI_{t+1}$, $\mathrm{CRC}_{t+1}$) will be available thereby increasing the size of the matrices. Online inversion of the large and growing matrix $\mathbf{Q}_t = \mathbf{K}_t^{-1}$ can be avoided by using a rank-1 update to the previous matrix $\mathbf{Q}_{t-1} = \mathbf{K}_{t-1}^{-1}$ as shown in equation (20):

$$\mathbf{Q}_t = \mathbf{K}_t^{-1} = \begin{bmatrix} \mathbf{Q}_{t-1} & \mathbf{0} \\ \mathbf{0}^T & 0 \end{bmatrix} - \left(\frac{1}{\gamma_t^2}\right)\begin{bmatrix} \mathbf{q}_t \\ -1 \end{bmatrix}\begin{bmatrix} \mathbf{q}_t \\ -1 \end{bmatrix}^T,\quad (20)$$

where $\mathbf{q}_t = \mathbf{Q}_{t-1}\mathbf{k}_t$.

Two items were ignored in the foregoing derivations: a forgetting factor $\lambda \in (0,1]$ which is useful for the non-stationary environment; and the restricted size of the codebook/dictionary, i.e. the amount of data in the dictionary $\mathcal{D}^{\mathrm{CQI}}$ needs to be restricted to aid implementation.

The CRC/BLER prediction (including both training and prediction mode) based on recursive GP, namely, KRLS-T algorithm, can be summarized as follows utilizing mean-MI and the CRC result (if available). Beginning with an initialization step using an initial set of mean-MI, $mMI_0$, and the CRC result from the first iteration, $CRC_1$, as discussed above, the mean-MI are buffered or delayed as denoted by $mMI_0$ being used with $CRC_1$.

The initial filter coefficients are computed using equations 7a, 7b, 7c, and 7d:

$$\mu_0 = K(mMI_0, mMI_0)[K(mMI_0, mMI_0) + \sigma_\varepsilon^2]^{-1} CRC_1, \text{ (7a)}$$

$$\Sigma_0 = K(mMI_0, mMI_0) - K(mMI_0, mMI_0)[K(mMI_0, mMI_0) + \sigma_\varepsilon^2]^{-1} K(mMI_0, mMI_0),$$

$$\text{(7b)}$$

$$\mathbf{Q}_0 = [K(mMI_0, mMI_0)]^{-1}, \text{ (7c)}$$

$$X = \{mMI_0\}. \text{ (7d)}$$

where $\sigma_\varepsilon^2$ represents a modeling error and $K(\cdot,\cdot)$ is a kernel function as described above. At each time iteration, denoted by subscript $t$, a BLER prediction, $\widehat{BLER}_t$, and variance, $\hat{\sigma}_{y_t}^2$, is found for each input/output pair in the dictionary of training data, where $M$ denotes the number of input/output pairs in the dictionary. The input in each pair is the delayed mean-MI of a given subframe, and the output is the corresponding CRC result. The individual pairs are denoted by subscript $i$ where $i =0,1,2,...M$. At each iteration $t$ (defined as $t=i+1$) and for each mean-MI/CRC pair $i$, the predictions can be found using the following algorithm.

The current filter parameters are updated as shown in equations 8a and 8b:

$$\mu_i \leftarrow \sqrt{\lambda}\, \mu_i, \text{ (8a)}$$

$$\Sigma_i \leftarrow \lambda\Sigma_i + (1 - \lambda)K(X, X), \text{ (8b)}$$

where $\lambda \in (0,1]$ is a forgetting factor, which is an additional free parameter of the KRLS-T algorithm. Next, some intermediate values are evaluated using equations 9a, 9b, 9c, and 9d:

$$\mathbf{q}_t = \mathbf{Q}_i K(mMI_t, X), \text{ (9a)}$$

$$\mathbf{h}_t = \Sigma_i \mathbf{q}_t, \text{ (9b)}$$

$$\gamma_t^2 = K(mMI_t, mMI_t) - [K(mMI_t, X)]^T \mathbf{q}_t, \text{ (9c)}$$

$$\hat{\sigma}_{f_t}^2 = \gamma_t^2 + \mathbf{q}_t^T \mathbf{h}_t. \text{ (9d)}$$

The BLER prediction, $\widehat{BLER}_t$, and the variance $\hat{\sigma}_{y_t}^2$ or uncertainty can be found from equations 10a and 10b:

$$\widehat{BLER}_t = \widehat{CRC}_t = \mathbf{q}_t^T \mu_i, \text{ (10a)}$$

$$\hat{\sigma}_{y_t}^2 = \sigma_\varepsilon^2 + \hat{\sigma}_{f_t}^2. \text{ (10b)}$$

The filter parameters for the next iteration are then updated using equations 11a, 11b, and 11c:

$$\mu_{i+1} = \begin{bmatrix} \mu_i \\ \widehat{CRC_t} \end{bmatrix} + \left( \frac{CRC_t - \widehat{CRC_t}}{\hat{\sigma}_{y_t}^2} \right) \begin{bmatrix} \mathbf{h}_t \\ \hat{\sigma}_{f_t}^2 \end{bmatrix}, (11a)$$

$$\Sigma_{i+1} = \begin{bmatrix} \Sigma_i & \mathbf{h}_t \\ \mathbf{h}_t^T & \hat{\sigma}_{f_t}^2 \end{bmatrix} - \left( \frac{1}{\hat{\sigma}_{y_t}^2} \right) \begin{bmatrix} \mathbf{h}_t \\ \hat{\sigma}_{f_t}^2 \end{bmatrix} \begin{bmatrix} \mathbf{h}_t \\ \hat{\sigma}_{f_t}^2 \end{bmatrix}^T, (11b)$$

$$\mathbf{Q}_{i+1} = \begin{bmatrix} \mathbf{Q}_i & \mathbf{0} \\ \mathbf{0}^T & 0 \end{bmatrix} - \left( \frac{1}{\gamma_t^2} \right) \begin{bmatrix} \mathbf{q}_t \\ -1 \end{bmatrix} \begin{bmatrix} \mathbf{q}_t \\ -1 \end{bmatrix}^T. (11c)$$

Then the input vector, X, is updated using the mean-MI, $mMI_t$, as shown in equation 12:

$$X = \{X, mMI_t\}. (12)$$

Benefits of the above described embodiments of GP system model FLA techniques can be seen using simulations of a 3GPP LTE rel-8 system employing closed loop link adaptation to select a CQI feedback and adjust the MCS of the transmitter. Simulation runs have been done to compare the recursive GP based FLA embodiment, KRLS-T, described above to a QKLMS based approach and the traditional or classical approach of MMIBM. The simulation parameters used in each run are listed in Table 2, below.

| Table 2 | |
|---|---|
| Cell Bandwidth | 10 MHz |
| Transmit EVM | 3% |
| MIMO Configuration ($N_R$ x $N_T$) | 4x4 |
| PDSCH Resource Allocation | 50 PRB-pair |
| Transmission Mode | 3 (Open-Loop Spatial Multiplexing - fixed Rank-4) with no fallback mode to space-frequency block coding. |
| Detection and Demodulation | Linear-MMSE and max-log-MAP |
| Modulation and Code Rate | Adaptive, no rank adaptation |
| Channel Model | EPA 20 Hz, Low Spatial Correlation |
| Channel and noise variance estimation | Ideal knowledge |
| BLER target | 10% |
| HARQ | Enabled |
| Number of Subframes | 5000 |
| OLLA | Enabled |
| Effective CQI delay | 9 ms |

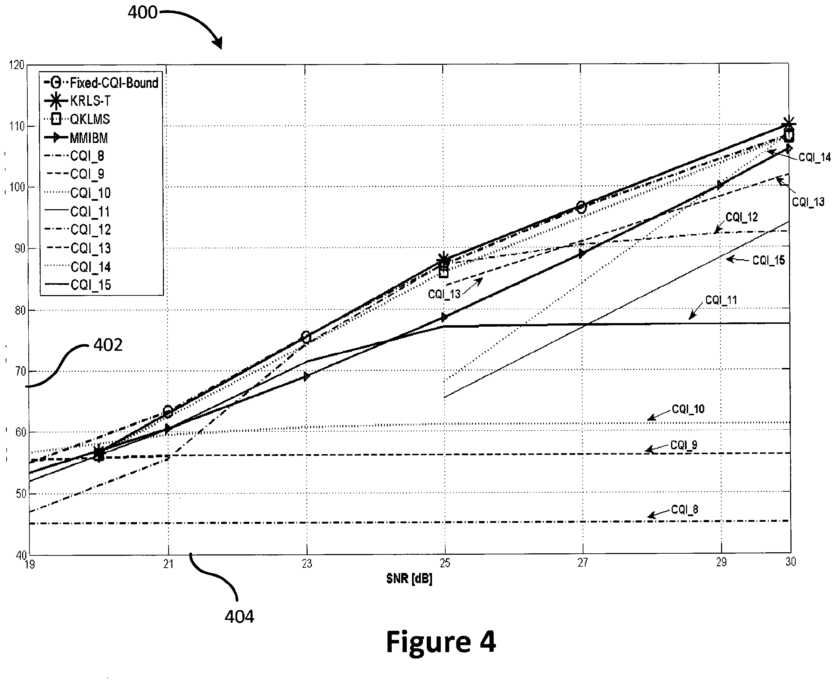

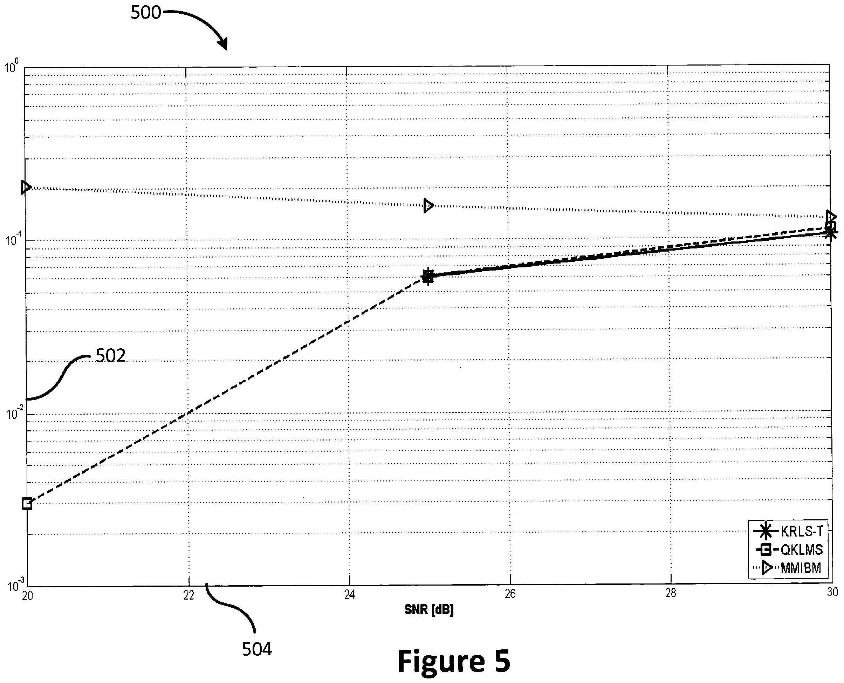

Figure 4 illustrates graphs 400 showing aggregate throughput of the physical downlink shared channel PDSCH with frequency division duplex FDD. The vertical axis 402 of figure 4 shows aggregate throughput for both codewords in units of mega-bits per second Mbps and the horizontal axis 404 shows signal to noise ratio SNR in decibels db. Figure 5 illustrates graphs 500 showing the average BLER of both codewords obtained using the same simulation parameters, shown in Table 2, as used for the simulations of Figure 4. The vertical axis 502 of Figure 5 shows the average BLER of both codewords in percent and the horizontal axis 504 shows signal to noise ratio SNR in decibels db.

Table 3 provides descriptions for graph labels shown in the legend of Figures 4 and 5.

| Table 3 | |
|---|---|
| Fixed-CQI-Bound | Corresponds to the performance of the fixed CQIs having the highest averaged throughput at the considered SNR values. |
| KRLS-T | The recursive GP (KRLS-T) performance having the dictionary size of 5. |
| QKLMS | The QKLMS algorithm having dictionary size of 5. |
| MMIBM | The classical/traditional MMIBM (mean-MI based) approach utilizing LUT for mapping from the computed mean-MI to BLER obtained under AWGN channel conditions. |
| CQI_$n$ | Corresponds to the performance of the fixed CQI index $n$ (or fixed reference channel). |

The graphs 400 show that the disclosed recursive GP based FLA, KRLS-T, can outperform the classical MMIBM approach in terms of throughput, and graphs 500 show the recursive GP system model, KRLS-T does a better job of maintaining average BLER below a desired threshold of 10% as compared to the classical MMIBM based approach. It is also apparent from Figure 4 that the quantized kernel least mean square, QKLMS, LA approach is rendering similar performance to the GP based FLA in terms of both throughput and BLER.

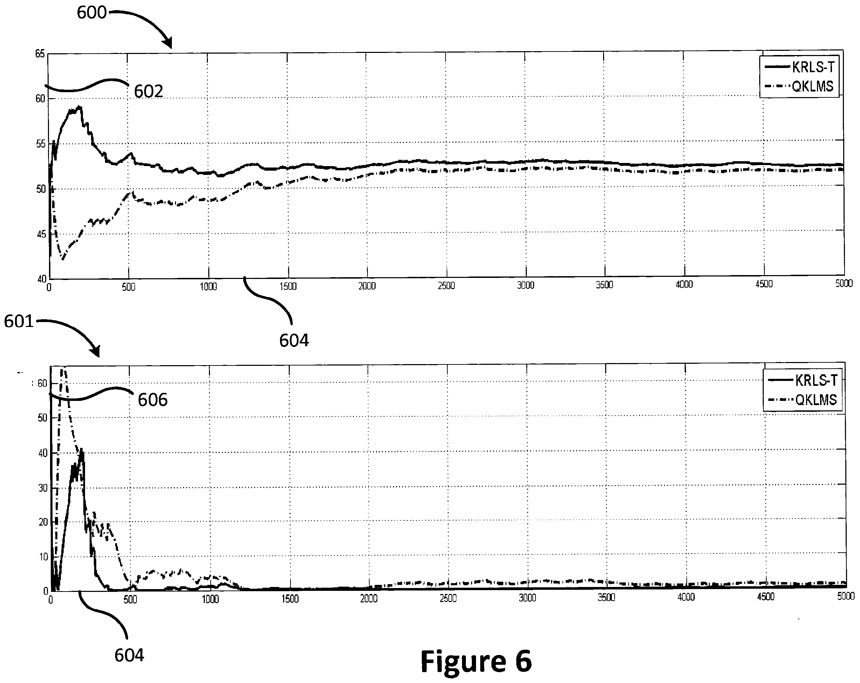

It is not unexpected that the QKLMS approach provides similar performance as it is known that once a QKLMS based FLA has been properly tuned, it can operate fairly well. However, QKLMS is not able to adapt to, or track, changes as quickly as necessary to perform well on a rapidly changing wireless medium. Figure 6 illustrates graphs 600 and 601 showing tracking performance of the new recursive GP system model FLA KRLS-T compared to the tracking performance of the conventional QKLMS LA approach. Graphs 600 illustrate tracking performance of the QKLMS based LA approach and the new recursive GP based FLA approach, KRLS-T, showing throughput for codeword zero in Mbps along the vertical axis 602 versus the number of transmitted subframes shown along the horizontal axis 604. Graphs 601 illustrate instant throughput variance along the vertical axis 606 versus the number of transmitted subframes shown along the horizontal axis 604 for both the QKLMS and KRLS-T techniques. Graphs 600 and 601 show that the recursive GP based FLA converges to the average throughput much more quickly than the QKLMS based approach. Thus it can be seen that the GP system model FLA approaches disclosed herein can perform better and track variations in the link medium significantly better than the prior art link adaptation approaches.

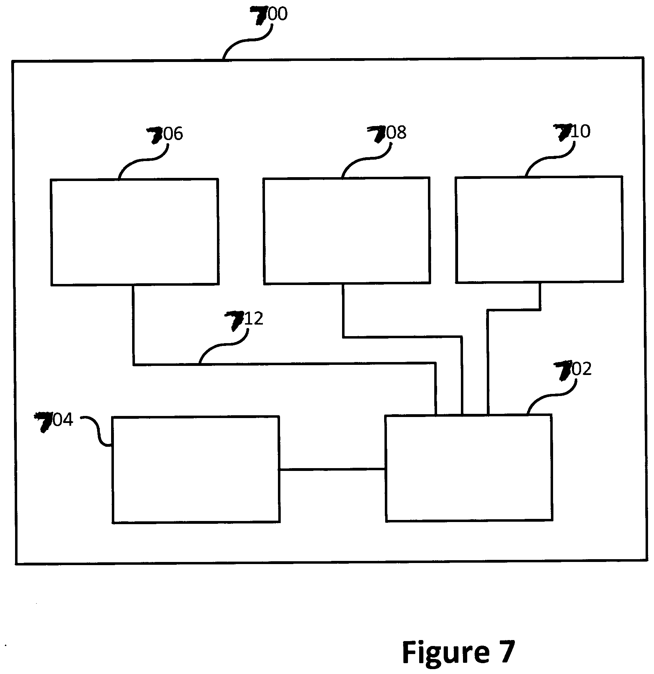

Figure 7 illustrates a block diagram of an apparatus for wireless communications 700 that is appropriate for implementing the FLA methods described herein. Apparatus 700 includes a processing apparatus 702 coupled to a computer memory 704, a radio frequency (RF) unit 706, a user interface (UI) unit 708, and a display unit 710. In certain embodiments, interaction with a user is not required. In these embodiments the UI 708 and display 710 may be omitted from the apparatus 700. The apparatus 700 may be used in MS for various types of wireless communications UE such as a cell phone, smart phone, tablet device, etc. The processing apparatus 702 may be a single processing device or may comprise a plurality of processing devices including special purpose devices such as for example it may include a digital signal processing (DSP) device, microprocessor, or other specialized processing device as well as a more general purpose processor.

The memory 704 is coupled to the processing apparatus 702 and may be a combination of various types of computer memory such as for example volatile memory, nonvolatile memory, read only memory (ROM), or other types of computer memory and stores computer program instructions which may be organized as method groups including an operating system, applications, file system, as well as other computer program instructions for other desirable computer implemented methods such as the FLA methods disclosed herein. Also included in the memory 704 are program data and data files which are stored and processed by the computer program instructions.

The radio frequency (RF) unit 706 is coupled to the processor and configured to receive and/or transmit radio frequency signals which are based on digital data 712 exchanged with the processing apparatus 702. The RF unit 706 includes analog to digital converters to digitize received RF signals at a desired sampling rate, such as for example a 30.72 megahertz (MHz) sample rate typically used for a 20 MHz LTE channel bandwidth, and send the digitized RF signals 712 to the processing apparatus 702. Conversely the RF unit 706 may include digital to analog converters to convert digital data 712 received by the RF unit 706 from the processing apparatus 702 into analog signals in preparation for transmission.

The UI 708 may include one or more well-known user interface elements such as a touch screen, keypad, buttons, as well as other elements for exchanging data with a user. The display 710 is configured to display a variety of information appropriate for a UE and may be implemented using any of well-known display types such as organic light emitting diodes (OLED), liquid crystal display (LCD), etc. The communications apparatus 700 is appropriate for implementing the FLA methods and algorithms described herein and with reference to Figure 1 and 2.

Thus, while there have been shown, described and pointed out, fundamental novel features of the invention as applied to the exemplary embodiments thereof, it will be understood that various omissions and substitutions and changes in the form and details of devices and methods illustrated, and in their operation, may be made by those skilled in the art without departing from the scope of the invention. Moreover, it is expressly intended that all combinations of those elements, which perform substantially the same function in substantially the same way to achieve the same results, are within the scope of the invention. Moreover, it should be recognized that structures and/or elements shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

**Claims**

1. A transceiver (700) operable for selecting channel state information, CSI, of a communication link wherein the transceiver (700) comprises:

    a receiver (706) configured to receive a communications signal (102) from the communication link and produce a received data signal;
    a processing apparatus (702) coupled to the receiver (706) and configured to receive the data signal; and
    a memory (704) coupled to the processing apparatus (702),
    wherein the processing apparatus (702) is configured to:

        generate channel estimates (111), noise covariance estimates (113), and a set of cyclic redundancy check, CRC, results (120) based on the received data signal (102); and
        generate a set of Link Quality Metric, LQM, (209) based on the channel estimates (111) and the noise covariance estimates (113);

        **characterized by**
        the processing apparatus (702) being further configured to buffer the generated set of LQM (209);
        use a Gaussian Processes, GP, system model to update model parameters of the GP system model (302) based on the buffered set of LQM (209) and the set of CRC results (120);
        use the updated model parameters with the GP system model to predict (124), (214), (304), a block error rate, BLER, (211) for each CSI in a set of supported CSI based on the generated set of LQM (209); and
        select (210) from the set of supported CSI the CSI (220) having a maximum throughput and the predicted BLER below a threshold
        wherein the LQM (209) is an effective mean mutual information, mean-MI, metric, and generating the set of LQM (209) comprises estimating the MI for each resource element, RE, and for each spatial layer for the given modulation alphabet used in the considered channel quality indicator, CQI, modulation coding scheme, MCS, at the considered REs.

2. The transceiver (700) of claim 1, wherein using a GP system model to update the model parameters comprises:

    updating the model parameters based on the generated set of CRC results (120), the buffered set of LQM (209) and a dictionary of training data; and
    updating the dictionary of training data based on the buffered set of LQM (209), the generated CRC results (120), and a CSI of the received data signal.

3. The transceiver (700) of claim 2, wherein the dictionary of training data comprises a plurality of buffered sets of LQM, at least one set of CRC results associated with each set of LQM, and the associated set of CSI.

4. The transceiver (700) of claim 3, wherein the dictionary of training data is enhanced:

    when the generated CRC results for the current CSI is a pass all lower throughput CSI in the set of supported CSI are associated with the CRC result of pass; and
    when the generated CRC results for the current CSI is a fail all higher throughput CSI in the set of supported CSI are associated with the CRC result of fail.

5. The transceiver (700) of any of the preceding claims 1 through 4, wherein the GP system model is a non-recursive GP system model.

6. The transceiver (700) of claim 1 through 4, wherein the GP system model is a recursive system model.

7. The transceiver (700) of claim 1, wherein generating a set of mean-MI comprises:

   generating mutual information, MI, values for each RE in the received data signal based on a linear equalizer assumption and the received data signal is conditioned with non-linear equalization; and
   generating the set of effective mean-MI based on the generated MI values.

8. The transceiver (700) of claims 5 or 6, wherein the GP system model comprises a set of GP system models and wherein:

   each GP system model in the set of GP system models is configured to predict the BLER for a particular CSI; and
   when the CSI associated with the received data signal is not associated with any of the set of GP system models, the GP system model associated with the nearest CSI is updated.

9. The transceiver (700) of any of the preceding claims 1 through 8, wherein the CSI value is a wide-band channel quality indicator, CQI, a sub-band CQI, a rank indicator, a wideband pre-coding matrix indicator, PMI, or a sub-band PMI.

10. The transceiver (700) of any of the preceding claims 1 through 9 wherein the communications link comprises a wireless communication link, and the receiver comprises a radio frequency, RF, unit.

11. The transceiver (700) of any of the preceding claims 1 through 10 wherein the communication link comprises an orthogonal frequency division multiple access, OFDMA, type communication link.

12. The transceiver (700) of claim 11 wherein the transceiver involves non-linear equalization or linear equalization.

13. The transceiver (700) of any of the preceding claims 10 through 12 wherein the transceiver is a user equipment comprising a user interface (708) and a display (710).

14. A computer program product comprising a non-transient computer readable storage medium having stored thereon data that when accessed by a processing apparatus, causes the processing apparatus to perform operations comprising:

   receiving channel estimates (111) and noise covariance estimates (113);
   generating a set of Link Quality Metric, LQM, (209) based on the channel estimates (111) and the noise covariance estimates (113); and
   buffering the generated set of LQM (209);
   **characterized by** further comprising generating a set of cyclic redundancy check, CRC, results (120) based on a received data signal (102);
   using a Gaussian Processes, GP, system model to update model parameters of the GP system model (302) based on the buffered set of LQM (209) and the set of CRC results (120);
   using the updated model parameters with the GP system model to predict (124), (214), (304), a block error rate, BLER, (211) for each CSI in a set of supported CSI based on the generated set of LQM; and
   selecting (210) from the set of supported CSI the CSI (220) having a maximum throughput and the predicted BLER below a threshold
   wherein the LQM (209) is an effective mean mutual information, mean-MI, metric, and generating the set of LQM (209) comprises estimating the MI for each resource element, RE, and for each spatial layer for the given modulation alphabet used in the considered channel quality indicator, CQI, modulation coding scheme, MCS, at the considered REs.

**Patentansprüche**

1. Transceiver (700), der zum Auswählen von Kanalzustandsinformationen, CSI (Channel State Information), einer Kommunikationsverbindung betriebsfähig ist, wobei der Transceiver (700) umfasst:

   einen Empfänger (706), der ausgelegt ist, um ein Kommunikationssignal (102) von der Kommunikationsverbindung zu empfangen und ein empfangenes Datensignal zu erzeugen;

eine Verarbeitungsvorrichtung (702), die mit dem Empfänger (706) gekoppelt und ausgelegt ist, um das Datensignal zu empfangen; und

einen Speicher (704), der mit der Verarbeitungsvorrichtung (702) gekoppelt ist,

wobei die Verarbeitungsvorrichtung (702) ausgelegt ist zum:

Erzeugen von Kanalschätzungen (111), Rauschkovarianzschätzungen (113) und einem Satz von Ergebnissen (120) für die zyklische Redundanzprüfung, CRC (Cyclic Redundancy Check), basierend auf dem empfangenen Datensignal (102); und

Erzeugen eines Satzes von Verbindungsqualitätsmetriken, LQM (Link Quality Metric), (209) basierend auf den Kanalschätzungen (111) und den Rauschkovarianzschätzungen (113);

**dadurch gekennzeichnet, dass**

die Verarbeitungsvorrichtung (702) ferner ausgelegt ist zum Puffern des erzeugten Satzes von LQM (209);

Verwenden eines Systemmodells für Gaußsche Prozesse, GP, zum Aktualisieren von Modellparametern des GP-Systemmodells (302) basierend auf dem gepufferten Satz von LQM (209) und dem Satz von CRC-Ergebnissen (120);

Verwenden der aktualisierten Modellparameter mit dem GP-Systemmodell zum Vorhersagen (124), (214), (304) einer Blockfehlerrate, BLER (Block Error Rate), (211) für alle CSI in einem Satz von unterstützten CSI basierend auf dem erzeugten Satz von LQM (209); und

Auswählen (210) aus dem Satz von unterstützten CSI der CSI (220), die einen maximalen Durchsatz und die vorhergesagte BLER unter einem Schwellenwert aufweisen,

wobei die LQM (209) Metriken für effektive mittlere gegenseitige Informationen, mittlere MI (Mutual Information), sind und das Erzeugen des Satzes von LQM (209) das Schätzen der MI für jedes Ressourcenelement, RE, und für jede räumliche Schicht für das gegebene verwendete Modulationsalphabet im betrachteten Kanalqualitätsindikator, CQI (Channel Quality Indicator), Modulationscodierungsschema, MCS, bei den betrachteten REs umfasst.

2. Transceiver (700) nach Anspruch 1, wobei das Verwenden eines GP-Systemmodells zum Aktualisieren der Modellparameter umfasst:

Aktualisieren der Modellparameter basierend auf dem erzeugten Satz von CRC-Ergebnissen (120), dem gepufferten Satz von LQM (209) und einem Wörterbuch von Trainingsdaten; und

Aktualisieren des Wörterbuchs von Trainingsdaten basierend auf dem gepufferten Satz von LQM (209), den erzeugten CRC-Ergebnissen (120) und CSI des empfangenen Datensignals.

3. Transceiver (700) nach Anspruch 2, wobei das Wörterbuch von Trainingsdaten eine Mehrzahl von gepufferten Sätzen von LQM, wenigstens einen Satz von CRC-Ergebnissen, die jedem Satz von LQM zugeordnet sind, und den assoziierten Satz von CSI umfasst.

4. Transceiver (700) nach Anspruch 3, wobei das Wörterbuch von Trainingsdaten verbessert wird:

wenn die erzeugten CRC-Ergebnisse für die aktuellen CSI erfolgreich sind, sind alle CSI mit niedrigerem Durchsatz im Satz der unterstützten CSI mit dem erfolgreichen CRC-Ergebnis assoziiert; und

wenn die erzeugten CRC-Ergebnisse für die aktuellen CSI nicht erfolgreich sind, sind alle CSI mit höherem Durchsatz im Satz der unterstützten CSI mit dem nicht erfolgreichen CRC-Ergebnis assoziiert.

5. Transceiver (700) nach einem der vorhergehenden Ansprüche 1 bis 4, wobei das GP-Systemmodell ein nicht-rekursives GP-Systemmodell ist.

6. Transceiver (700) nach Anspruch 1 bis 4, wobei das GP-Systemmodell ein rekursives Systemmodell ist.

7. Transceiver (700) nach Anspruch 1, wobei das Erzeugen eines Satzes von mittleren MI umfasst:

Erzeugen von Werten gegenseitiger Informationen, MI (Mutual Information), für jedes RE im empfangenen Datensignal basierend auf einer linearen Entzerrerannahme, und das empfangene Datensignal wird mit nichtlinearer Entzerrung aufbereitet; und

Erzeugen des Satzes von effektiven mittleren MI basierend auf den erzeugten MI-Werten.

8. Transceiver (700) nach Anspruch 5 oder 6, wobei das GP-Systemmodell einen Satz von GP-Systemmodellen umfasst und wobei:

   jedes GP-Systemmodell im Satz von GP-Systemmodellen ausgelegt ist, um die BLER für bestimmte CSI vorherzusagen; und
   wenn die CSI, die mit dem empfangenen Datensignal assoziiert sind, mit keinem des Satzes von GP-Systemmodellen assoziiert sind, das GP-Systemmodell aktualisiert wird, das mit den nächsten CSI assoziiert sind.

9. Transceiver (700) nach einem der vorhergehenden Ansprüche 1 bis 8, wobei der CSI-Wert ein Breitband-Kanalqualitätsindikator, CQI (Channel Quality Indicator), ein Teilband-CQI, ein Rangindikator, ein Breitband-Vorcodierungs-Matrixindikator, PMI (Pre-coding Matrix Indicator), oder ein Teilband-PMI ist.

10. Transceiver (700) nach einem der vorhergehenden Ansprüche 1 bis 9, wobei die Kommunikationsverbindung eine drahtlose Kommunikationsverbindung umfasst und der Empfänger eine Einheit für Hochfrequenz, RF (Radio Frequency), umfasst.

11. Transceiver (700) nach einem der vorhergehenden Ansprüche 1 bis 10, wobei die Kommunikationsverbindung eine Kommunikationsverbindung vom Typ orthogonaler Frequenzmultiplex-Mehrfachzugriff (OFDMA, Orthogonal Frequency Division Multiple Access) umfasst.

12. Transceiver (700) nach Anspruch 11, wobei der Transceiver nichtlineare Entzerrung oder lineare Entzerrung beinhaltet.

13. Transceiver (700) nach einem der vorhergehenden Ansprüche 10 bis 12, wobei der Transceiver ein Benutzergerät ist, das eine Benutzerschnittstelle (708) und eine Anzeige (710) umfasst.

14. Computerprogrammprodukt, das ein nicht-transientes computerlesbares Speichermedium umfasst, auf dem Daten gespeichert sind, die, wenn auf sie durch eine Verarbeitungsvorrichtung zugegriffen wird, veranlassen, dass die Verarbeitungsvorrichtung Operationen durchführt, umfassend:

   Empfangen von Kanalschätzungen (111) und Rauschkovarianzschätzungen (113);
   Erzeugen eines Satzes von Verbindungsqualitätsmetriken, LQM (Link Quality Metric), (209) basierend auf den Kanalschätzungen (111) und den Rauschkovarianzschätzungen (113); und
   Puffern des erzeugten Satzes von LQM (209);
   **dadurch gekennzeichnet, dass** es ferner umfasst Erzeugen eines Satzes von Ergebnissen (120) für die zyklische Redundanzprüfung, CRC (Cyclic Redundancy Check), basierend auf dem empfangenen Datensignal (102);
   Verwenden eines Systemmodells für Gaußsche Prozesse, GP, zum Aktualisieren von Modellparametern des GP-Systemmodells (302) basierend auf dem gepufferten Satz von LQM (209) und dem Satz von CRC-Ergebnissen (120);
   Verwenden der aktualisierten Modellparameter mit dem GP-Systemmodell zum Vorhersagen (124), (214), (304) einer Blockfehlerrate, BLER (Block Error Rate), (211) für alle CSI in einem Satz von unterstützten CSI basierend auf dem erzeugten Satz von LQM; und
   Auswählen (210) aus dem Satz von unterstützten CSI der CSI (220), die einen maximalen Durchsatz und die vorhergesagte BLER unter einem Schwellenwert aufweisen,
   wobei die LQM (209) Metriken für effektive mittlere gegenseitige Informationen, mittlere MI (Mutual Information), sind und das Erzeugen des Satzes von LQM (209) das Schätzen der MI für jedes Ressourcenelement, RE, und für jede räumliche Schicht für das gegebene verwendete Modulationsalphabet im betrachteten Kanalqualitätsindikator, CQI (Channel Quality Indicator), Modulationscodierungsschema, MCS, bei den betrachteten REs umfasst.

**Revendications**

1. Émetteur-récepteur (700) ayant pour fonction de sélectionner des informations d'état de canal, CSI, d'une liaison de communication, dans lequel l'émetteur-récepteur (700) comprend :

   un récepteur (706) configuré pour recevoir un signal de communication (102) de la liaison de communication et produire un signal de données reçu ;
un appareil de traitement (702) couplé au récepteur (706) et configuré pour recevoir le signal de données ; et
une mémoire (704) couplée à l'appareil de traitement (702),
dans lequel l'appareil de traitement (702) est configuré pour :

générer des estimées de canal (111), des estimées de covariance du bruit (113), et un ensemble de résultats de vérification de redondance cyclique, CRC, (120) sur la base du signal de données reçu (102) ; et
générer un ensemble de Métriques de Qualité de Liaison, LQM, (209) sur la base des estimées de canal (111) et des estimées de covariance du bruit (113) ;

**caractérisé en ce que**
l'appareil de traitement (702) est en outre configuré pour mettre en tampon l'ensemble généré de LQM (209) ;
utiliser un modèle de système à Processus Gaussien, GP, pour mettre à jour des paramètres de modèle du modèle de système GP (302) sur la base de l'ensemble mis en tampon de LQM (209) et de l'ensemble de résultats de CRC (120) ;
utiliser les paramètres de modèle mis à jour avec le modèle de système GP pour prédire (124), (214), (304), un taux d'erreur sur les blocs, BLER, (211) pour chaque CSI dans un ensemble de CSI prises en charge sur la base de l'ensemble généré de LQM (209) ; et
sélectionner (210), dans l'ensemble de CSI prises en charge, les CSI (220) dont le débit maximum et le BLER prédit sont inférieurs à un seuil,
dans lequel la LQM (209) est une métrique d'informations mutuelles moyennes, MI-moyennes, effective, et la génération de l'ensemble de LQM (209) consiste à estimer la MI pour chaque élément de ressource, RE, et pour chaque couche spatiale pour l'alphabet de modulation donné utilisé dans la technique considérée de codage par modulation MCS d'indicateur de qualité de canal, CQI, sur les RE considérés.

2. Émetteur-récepteur (700) selon la revendication 1, dans lequel l'utilisation d'un modèle de système GP pour mettre à jour les paramètres de modèle comprend :

la mise à jour des paramètres du modèle sur la base de l'ensemble généré de résultats de CRC (120), de l'ensemble mis en tampon de LQM (209) et d'un dictionnaire de données d'apprentissage ; et
la mise à jour du dictionnaire de données d'apprentissage sur la base de l'ensemble mis en tampon de LQM (209), des résultats de CRC (120) générés, et d'une CSI du signal de données reçu.

3. Émetteur-récepteur (700) selon la revendication 2, dans lequel le dictionnaire de données d'apprentissage comprend une pluralité d'ensembles mis un tampon de LQM, au moins un ensemble de résultats de CRC associés à chaque ensemble de LQM, et l'ensemble associé de CSI.

4. Émetteur-récepteur (700) selon la revendication 3, dans lequel le dictionnaire de données d'apprentissage est amélioré :

lorsque les résultats de CRC générés pour la CSI actuelle, qui est une CSI d'acceptation totale de plus faible débit dans l'ensemble de CSI prises en charge, sont associés au résultat de CRC d'acceptation ; et
lorsque les résultats de CRC générés pour la CSI actuelle, qui est une CSI de débit supérieur d'échec total dans l'ensemble de CSI prises en charge, sont associés au résultat de CRC d'échec.

5. Émetteur-récepteur (700) selon l'une quelconque des revendications 1 à 4 précédentes, dans lequel le modèle de système GP est un modèle de système GP non récursif.

6. Émetteur-récepteur (700) selon les revendications 1 à 4, dans lequel le modèle de système GP est un modèle de système récursif.

7. Émetteur-récepteur (700) selon la revendication 1, dans lequel la génération d'un ensemble de MI moyennes comprend :

la génération de valeurs d'informations mutuelles, MI, pour chaque RE dans le signal de données reçu sur la base d'une hypothèse d'égaliseur linéaire et lorsque le signal de données reçu est conditionné par égalisation non linéaire ; et
la génération de l'ensemble de MI moyennes effectives sur la base des valeurs de MI générées.

**8.** Émetteur-récepteur (700) selon les revendications 5 ou 6, dans lequel le modèle de système GP comprend un ensemble de modèles de système GP et dans lequel :

chaque modèle de système GP de l'ensemble de modèles de système GP est configuré pour prédire le BLER pour une CSI particulière ; et

lorsque la CSI associée au signal de données reçu n'est pas associée à l'un quelconque de l'ensemble de modèles de système GP, le modèle de système GP associé à la CSI la plus proche est mis à jour.

**9.** Émetteur-récepteur (700) selon l'une quelconque des revendications 1 à 8 précédentes, dans lequel la valeur de CSI est un indicateur de qualité de canal à large bande, CQI, un CQI de sous-bande, un indicateur de rang, un indicateur de matrice de précodage à large bande, PMI, ou un PMI de sous-bande.

**10.** Émetteur-récepteur (700) selon l'une quelconque des revendications 1 à 9 précédentes, dans lequel la liaison de communication comprend une liaison de communication sans fil, et le récepteur comprend une unité radiofréquence, RF.

**11.** Émetteur-récepteur (700) selon l'une quelconque des revendications 1 à 10 précédentes, dans lequel la liaison de communication comprend une liaison de communication du type à accès multiple par répartition orthogonale de fréquence, OFDMA.

**12.** Émetteur-récepteur (700) selon la revendication 11, dans lequel l'émetteur-récepteur met en jeu une égalisation non linéaire ou une égalisation linéaire.

**13.** Émetteur-récepteur (700) selon l'une quelconque des revendications 10 à 12 précédentes, dans lequel l'émetteur-récepteur est un équipement d'utilisateur comprenant une interface utilisateur (708) et un afficheur (710).

**14.** Produit de programme d'ordinateur comprenant un support de stockage non volatil lisible par ordinateur sur lequel sont stockées des données qui, lorsqu'un appareil de traitement y accède, amènent l'appareil de traitement à effectuer les opérations comprenant :

la réception d'estimées de canal (111) et d'estimées de covariance du bruit (113) ;

la génération d'un ensemble de Métriques de Qualité de Liaison, LQM, (209) sur la base des estimées de canal (111) et des estimées de covariance du bruit (113) ; et

la mise en tampon de l'ensemble généré de LQM (209) ;

**caractérisé en ce qu'**il comprend en outre la génération d'un ensemble de résultats de vérification de redondance cyclique, CRC, (120) sur la base d'un signal de données reçu (102) ;

l'utilisation d'un modèle de système à Processus Gaussien, GP, pour mettre à jour des paramètres de modèle du modèle de système GP (302) sur la base de l'ensemble mis en tampon de LQM (209) et de l'ensemble de résultats de CRC (120) ;

l'utilisation de paramètres de modèle mis à jour avec le modèle de système GP pour prédire (124), (214), (304), un taux d'erreur sur les blocs, BLER, (211) pour chaque CSI dans un ensemble de CSI prises en charge sur la base de l'ensemble généré de LQM ; et

la sélection (210), dans l'ensemble de CSI prises en charge, des CSI (220) dont le débit maximum et le BLER prédit sont inférieurs à un seuil,

dans lequel la LQM (209) est une métrique d'informations mutuelles moyennes, MI-moyennes, effective, et la génération de l'ensemble de LQM (209) consiste à estimer les MI pour chaque élément de ressource, RE, et pour chaque couche spatiale pour l'alphabet de modulation donné utilisé dans la technique considérée de codage par modulation MCS d'indicateur de qualité de canal, CQI, sur les RE considérés.

**Figure 1**

200

204

202

111 113

206

208

207

210

213

212

209

216 214

211

218

220

**Figure 2**

308 →

**302**

310 ⇢

312 →

**304**

314

306

EP 2 959 621 B1

**Figure 3**

Figure 4

EP 2 959 621 B1

Figure 5

SNR [dB]

500

502

504

KRLS-T
QKLMS
MMIBM

Figure 6

EP 2 959 621 B1

**Figure 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Mutual Information Metrics for Fast Link Adaptation in IEEE 802.11n. **JENSEN et al.** IEEE International Conference on Communications, 2008 : ICC '08. IEEE, 19 May 2008, 4910-4915